# EUROPÄISCHE PATENTSCHRIFT

(11) **EP 0 750 118 B1**
(45) Veröffentlichungstag und Bekanntmachung des Hinweises auf die Patenterteilung: **31.10.2001**
(21) Anmeldenummer: 96250125.0
(22) Anmeldetag: 10.06.1996
(51) Int. Cl.: F04D 27/02, F04D 29/14, F16J 15/34

(54) **Verfahren und Vorrichtung zur Sicherung der Funktionstüchtigkeit von Gasdichtungen bei Turboverdichtern**
Method and device for securing the availability of gas seals in turbo compressors
Procédé et dispositif de sécurité de la disponibilité des joints d'étanchéité des turbo-compresseurs

(30) Priorität: 22.06.1995 DE 19523713
(43) Veröffentlichungstag der Anmeldung: 27.12.1996
(73) Patentinhaber: Atecs Mannesmann AG, 40213 Düsseldorf (DE)
(72) Erfinder: Zacharias, Wolfgang, Dipl.-Ing., 47198 Duisburg (DE); Schellong, Helmut, Dipl.-Ing., 47239 Duisburg (DE)
(74) Vertreter: Meissner, Peter E., Dipl.-Ing.

(56) Entgegenhaltungen:
- EP-A- 0 361 844
- WO-A-91/14853
- CH-A- 315 986
- CH-A- 423 075
- CH-A- 464 625
- DE-C- 4 216 006
- DE-C- 4 225 642

## Beschreibung

Die Erfindung betrifft ein Verfahren zur Sicherung der Funktionstüchtigkeit von Gasdichtungen bei Turboverdichtem, insbesondere Turboverdichter mit einem höheren Betriebsdruck und einem höheren Stillstandsdruck, die mit gasgeschmierte Gleitringdichtungen zur Abdichtung der Wellendurchführungen aufweisen, und bei dem von einer Anzapfstelle höheren Drucks vom Turboverdichter aus über Leitungen und den darin angeordneten Filtern gereinigtes Gas den gasgeschmierten Gleitringdichtungen zugeführt wird, sowie eine Vorrichtung zur Durchführung des Verfahrens. Eine Vorrichtung dieser Art ist aus der WO 91/14853 bekannt.

Gasgeschmierte Gleitringdichtungen brauchen zur Aufrechterhaltung ihrer Funktionsfähigkeit immer eine Zuspeisung mit sauberem Gas. Üblicherweise wird bei laufendem Turboverdichter Gas von einer Stufe höheren Drucks entnommen und nach Filterung und eventueller Trocknung in die Gasdichtungen geleitet (vgl. Prospekt Pacific Gaspac, Gleitringdichtungen: Das Betreiben und Überwachen von Gas-Seals unter Sicherheitsaspekten " der Fa. Pacific Wietz GmbH & Co KG, Dortmund) . Bei Stillstand des Turboverdichters ist der Gasdruck im eingeschlossenen System überall gleich groß. In diesem Zustand kann Gas, das nicht gereinigt ist, in die gasgeschmierten Gleitringdichtungen gelangen und diese so verschmutzen, daß sie bei neuem Verdichterstart ausfallen.

Aufgabe der Erfindung ist es, ein Verfahren zur Sicherung der Funktionstüchtigkeit von gasgeschmierten Gleitringdichtungen bei Turboverdichtern aller Bauarten unter allen Betriebsbedingungen insbesondere für die Stillstandsphase anzugeben. Eine weitere Aufgabe besteht darin, daß die Vorrichtung zur Durchführung des Verfahrens kompakt und einfach im Aufbau sein soll.

Diese Aufgabe wird mit einem Verfahren gemäß dem Anspruches 1 und einer Vorrichtung gemäß dem Anspruch 3 gelöst. Vorteilhafte Weiterbildungen sowie eine Vorrichtung zur Durchführung des Verfahrens sind Bestandteil von Unteransprüchen.

Erfindungsgemäß wird bei Stillstand des Turboverdichters der Druck des Gases außerhalb des Turboverdichters über das beim Stillstand herrschende Druckniveau angehoben und den gasgeschmierten Gleitringdichtungen gereinigt zugeführt. Auf diese Weise wird sichergestellt, daß auch in der Stillstandsphase die gasgeschmierten Gleitringdichtungen sauber bleiben und somit eine lange Lebensdauer erreichen.

Die erforderliche Druckanhebung erfolgt vorzugsweise durch einen einstufigen Verdichter mit einem Radiallaufrad. Dieser Verdichter ist in einer Bypass-Leitung, die von der Leitung der Anzapfstelle abzweigt, angeordnet. Auch im Sinne eines nachträglichen Einbaues eines solchen Verdichters zur Druckerhöhung ist die Vorrichtung kompakt ausgeführt und einfach in der Anordnung. Das Radiallaufrad ist direkt auf der Abtriebswelle des antreibenden Elektromotors angeordnet. Der Elektromotor ist druckfest ausgelegt und zusammen mit dem Radiallaufrad in einem gekapselten Gehäuse angeordnet. Die Stromzufuhr für den Elektromotor erfolgt über eine Druckgas-Durchführung. Vorzugsweise wird das verdichtete Gas in Teilmengen gekühlt, um die Temperatur des Elektromotors niedrig zu halten.

Bei dem erfindungsgemäßen Verfahren wird davon ausgegangen, daß das für die Schmierung der Gleitringdichtungen erforderliche Gas dem Turboverdichter entnommen wird. Vorstellbar ist aber auch eine andere Entnahmestelle wie z. B. Pipeline oder Gasspeicher. Da diese Entnahmestellen im Unterschied zum Turboverdichter einen festen Druck vorgegeben haben, ist die Funktion der Gleitringdichtungen nur dann gesichert, wenn der Entnahmedruck höher liegt als der erforderliche Gasdruck für den Stillstandsfall. Anderenfalls ist ebenfalls eine Druckerhöhung notwendig.

In der Zeichnung wird anhand eines Ausführungsbeispieles das erfindungsgemäße Verfahren am Beispiel eines Einwellenverdichters sowie die dazugehörige Vorrichtung näher erläutert.

Es zeigen:
- Figur 1: ein Prinzip-Fließbild der generellen Anordnung
- Figur 2: im vergrößerten Maßstab die erfindungsgemäße Vorrichtung

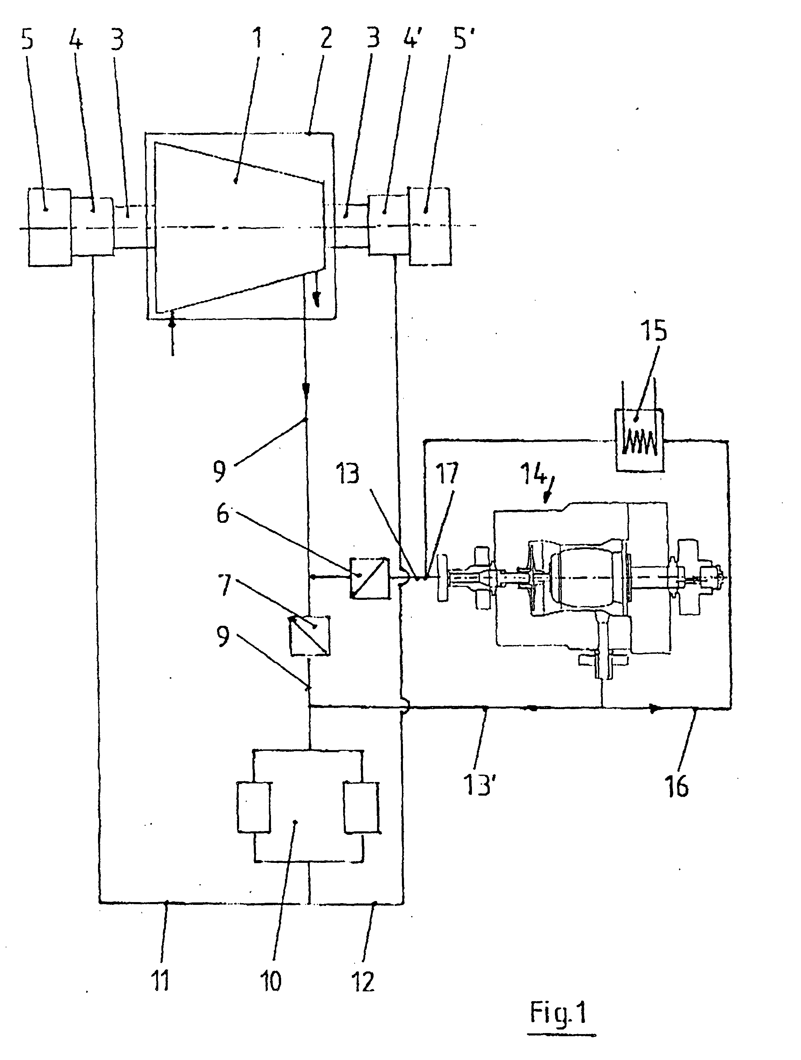

In Figur 1 ist in einem Prinzip-Fließbild die generelle erfindungsgemäße Anordnung dargestellt. Sie besteht aus einem Turboverdichter 1, dessen aus dem Gehäuse 2 heraustretende Welle 3 über gasgeschmierte Gleitringdichtungen 4,4' abgedichtet wird. Die Lagerung der Welle 3 in zwei Lagern 5,5' ist hier nur angedeutet. Nach dem bekannten Stand der Technik wird an einer Stelle höheren Drucks der Turboverdichter 1 angezapft und über eine Leitung 9 das Gas einer Filteranlage 10 zugeführt. Auf die Einzelheiten der Filteranlage 10 wird hier nicht eingegangen. Nach Durchlauf der Filteranlage 10 wird das gereinigte Gas über Leitungen 11,12 vor die jeweiligen gasgeschmierten Gleitringdichtungen 4,4' geführt. Die weiteren hier dargestellten Leitungen dienen dazu, die bei den gasgeschmierten Gleitringdichtungen 4,4' anfallenden Leckagemengen abzuführe bzw. die gasgeschmierten Gleitringdichtungen 4,4' vom Ölraum zu trennen.

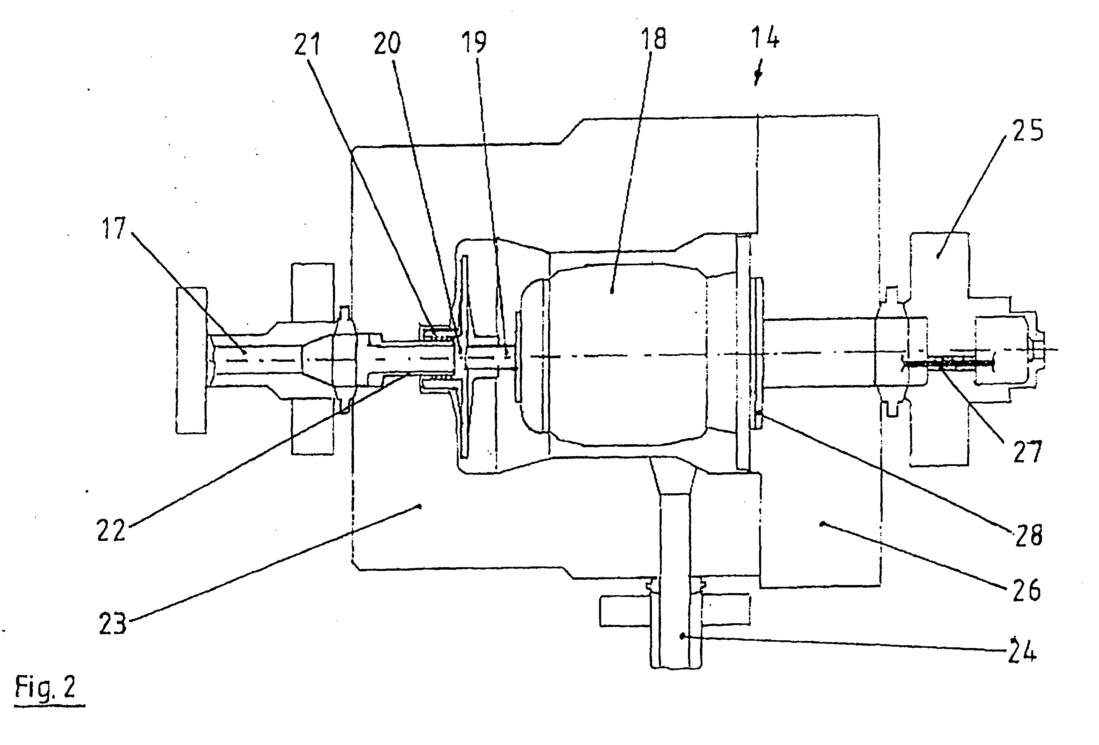

Erfindungsgemäß zweigt von der Leitung 9 zwischen Anzapfstelle und Filteranlage 10 eine Bypass-Leitung 13,13' ab, in der das Druckerhöhungsaggregat 14 angeordnet ist. Die Einzelheiten dieses Aggregates 14 sind in Fig. 2 dargestellt. Ein Teil des verdichteten Gases kann vom Austritt aus dem Druckerhöhungsaggregat 14 in eine Rückführleitung 13 abgezweigt und über einen Kühler 15 der Eingangsseite 17 (Fig. 2) wieder zugeführt werden.

In Figur 2 ist in einem vergrößerten Maßstab das erfindungsgemäße Druckerhöhungsaggregat 14 dargestellt. Dieser Verdichter 14 besteht aus einem druckgasfest ausgebildeten Elektromotor 18, bei dem auf der Abtriebswelle 19 ein Radiallaufrad 20 befestigt ist. Durch ein in das Laufrad 20 integriertes Labyrinth 21 wird zwischen diesen und einer im Verdichtergehäuse 23 eingesetzten Buchse 22 die Rückströmung des komprimierten Gases reduziert. Über die Eingangsseite 17, die am Gehäuse 23 angeflanscht ist, erfolgt die Zufuhr des Gases. Nach der Verdichtung verläßt das Gas den Druckraum über die Auslaßseite 24, die ebenfalls am Gehäuse 23 angeflanscht ist. Die Stromzufuhr für den Elektromotor 18 erfolgt über einen Flansch 25, der am Deckel 26 befestigt ist. Die eigentliche Zuführung erfolgt über eine Druckgas-Durchführung 27. Der Elektromotor 18 ist über einen Flansch 28 auf der Innenseite des Deckels 26 befestigt. Die dicken Wände sowohl für das Gehäuse 23 als auch den Deckel 26 sind für eine Hochdruckauslegung erforderlich, um die dabei auftretenden Kräfte auffangen zu können.Bei niedrigen Drücken wird die Dimensionierung entsprechend ausgeführt.

## Patentansprüche

1. Verfahren zur Sicherung der Funktionstüchtigkeit von Gasdichtungen bei Turboverdichtern, insbesondere Turboverdichter mit einem höheren Betriebsdruck und einem höheren Stillstandsdruck, die mit Gas geschmierte Gleitringdichtungen zur Abdichtung der Wellendurchführungen aufweisen und bei dem von einer Anzapfstelle höheren Drucks vom Turboverdichter aus über Leitungen und den darin angeordneten Filtern gereinigtes Gas den gasgeschmierten Gleitringdichtungen zugeführt wird,
**dadurch gekennzeichnet,**
**dass** bei Stillstand des Turboverdichters der Druck des Gases außerhalb des Turboverdichters über das beim Stillstand herrschende Druckniveau mittels eines Druckerhöhungsaggregates angehoben wird, das in einer im Bereich zwischen Anzapfstelle und Filteranlage abzweigenden Bypass-Leitung angeordnet ist.

2. Verfahren nach Anspruch 1,
**dadurch gekennzeichnet,**
**dass** das Gas nach der Verdichtung in Teilmengen gekühlt wird.

3. Vorrichtung zur Durchführung des Verfahrens nach Anspruch 1 mit einem Turboverdichter, deren aus dem Gehäuse sich erstreckende Welle mit mindestens je einer gasgeschmierten Gleitringdichtung abgedichtet ist und von einer Anzapfstelle höheren Drucks vom Turboverdichter aus über Leitungen und darin angeordneten Filtern gereinigtes Gas den Gleitringdichtungen zugeführt wird,
**dadurch gekennzeichnet,**
**dass** von der abzuführenden Leitung (9) im Bereich zwischen Anzapfstelle und Filteranlage (10) eine Bypass-Leitung (13,13') abzweigt, in der ein Druckerhöhungsaggregat (14) angeordnet ist.

4. Vorrichtung nach Anspruch 3,
**dadurch gekennzeichnet,**
**dass** das Druckerhöhungsaggregat (14) ein einstufiger Verdichter mit einem Radiallaufrad (20) ist.

5. Vorrichtung nach Anspruch 4,
**dadurch gekennzeichnet,**
**dass** der Verdichter direkt von einem Elektromotor (18) angetrieben wird und das Radiallaufrad (20) auf der Abtriebswelle (19) des Elektromotors (18) befestigt ist.

6. Vorrichtung nach Anspruch 5,
**dadurch gekennzeichnet,**
**dass** der Elektromotor (18) gasdruckfest ausgelegt und zusammen mit dem Radiallaufrad (20) in einem gekapselten Gehäuse (23) angeordnet ist.

7. Vorrichtung nach Anspruch 6,
**dadurch gekennzeichnet,**
**dass** die Stromzufuhr für den Elektromotor (18) über eine Druckgas-Durchführung (27) erfolgt.

## Claims

1. Method for securing the availability of gas seals in turbo compressors, especially turbo compressors having a higher operating pressure and a higher stop period pressure, which have gas-lubricated rotating mechanical seals to seal off the shaft feedthroughs and in which purified gas is supplied from an extraction point of high pressure from the turbo compressor via lines and the filters disposed therein to the gas-lubricated mechanical seals,
**characterised in that**
when the turbo compressor is idle, the pressure of the gas outside the turbo compressor is raised above the pressure level prevailing during the stop period by means of a pressure increasing assembly which is disposed in a bypass line branching off in the region between the extraction point and the filtering installation.

2. Method according to claim 1, **characterised in that** the gas is cooled in batches after compression.

3. Apparatus for carrying out the method according to claim 1 having a turbo compressor, the shaft of which extending from the housing is sealed by means of at least respectively one gas-lubricated rotating mechanical seal and purified gas is supplied from an extraction point of higher pressure from the turbo compressor via lines and filters disposed therein to the mechanical seals, **characterised in that** from the line (9) in the region between the extraction point and the filtering installation (10) a bypass line (13, 13') branches off, in which a pressure increasing assembly (14) is disposed.

4. Apparatus according to claim 3, **characterised in that** the pressure increasing assembly (14) is a single-stage compressor having a radial rotor (20).

5. Apparatus according to claim 4, **characterised in that** the compressor is driven directly by an electric motor (18) and the radial rotor (20) is secured on the output shaft (19) of the electric motor (18).

6. Apparatus according to claim 5, **characterised in that** the electric motor (18) is designed resistant to gas pressure and is disposed together with the radial rotor (20) in a sealed housing (23).

7. Apparatus according to claim 6, **characterised in that** power is supplied to the electric motor (18) via a compressed gas feedthrough (27).

## Revendications

1. Procédé pour garantir la fonctionnalité de joints étanches aux gaz pour des turbocompresseurs, en particulier des turbocompresseurs ayant une pression de fonctionnement élevée et une pression d'arrêt élevée, qui présentent des joints étanches à anneau glissant sur couche de gaz pour l'étanchéification de passages d'arbre, et dans lequel, à partir d'un point de prélèvement de pression élevée du turbocompresseur, du gaz purifié est amené, par l'intermédiaire de conduits et des filtres agencés dans ceux-ci, aux joints étanches à anneau glissant sur couche de gaz,
**caractérisé en ce que**, à l'arrêt du turbocompresseur, la pression du gaz à l'extérieur du turbocompresseur est élevée au-dessus du niveau de pression régnant à l'arrêt au moyen d'un appareil d'augmentation de pression, qui est agencé dans un conduit de dérivation, branché dans la zone entre le point de prélèvement et l'installation de filtration.

2. Procédé selon la revendication 1,
**caractérisé en ce que** le gaz est refroidi après la compression en quantités partielles.

3. Dispositif pour la mise en oeuvre du procédé selon la revendication 1, comportant un turbocompresseur, dont l'arbre s'étendant hors du carter est étanchéifié par au moins un joint étanche à anneau glissant sur couche de gaz et, à partir d'un point de prélèvement de pression élevée du turbocompresseur, du gaz purifié est amené, par l'intermédiaire de conduits et de filtres agencés dans ceux-ci, aux joints étanches à anneau glissant,
**caractérisé en ce qu'**un conduit de dérivation (13, 13') dérive du conduit (9) à évacuer dans la zone entre le point de prélèvement et l'installation de filtration (10), conduit de dérivation dans lequel est agencé un appareil d'augmentation de pression (14).

4. Dispositif selon la revendication 3,
**caractérisé en ce que** l'appareil d'augmentation de pression (14) est un compresseur à un étage ayant un rotor radial (20).

5. Dispositif selon la revendication 4,
**caractérisé en ce que** le compresseur est entraîné directement par un moteur électrique (18) et le rotor radial (20) est fixé sur l'arbre de sortie (19) du moteur électrique (18).

6. Dispositif selon la revendication 5,
**caractérisé en ce que** le moteur électrique (18) est conçu de façon résistant à la pression de gaz et est agencé, en même temps que le rotor radial (20), dans un carter étanche (23).

7. Dispositif selon la revendication 6,
**caractérisé en ce que** l'amenée de courant pour le moteur électrique (18) est effectuée par l'intermédiaire d'un passage de gaz comprimé (27).
